# EUROPEAN PATENT APPLICATION

(11) **EP 4 675 949 A1**
(43) Date of publication of application: **07.01.2026**
(21) Application number: 24787870.5
(22) Date of filing: 18.03.2024
(51) Int. Cl.: H04L 1/00

(54) **COMMUNICATION METHOD AND APPARATUS FOR ANCHOR POINTS ON VEHICLE, AND COMPUTER-READABLE STORAGE MEDIUM**

(30) Priority: 14.04.2023 CN 202310456017
(71) Applicant: Huawei Technologies Co., Ltd., Shenzhen, Guangdong 518129 (CN)
(72) Inventor: XIE, Zichen, Shenzhen, Guangdong 518129 (CN); WANG, Chengzhao, Shenzhen, Guangdong 518129 (CN)
(74) Representative: MERH-IP Matias Erny Reichl Hoffmann Patentanwälte PartG mbB
(86) International application number: PCT/CN2024/082259
(87) International publication number: WO 2024/212764

(57) **Abstract**

Embodiments of this application relate to the vehicle field, and provide a communication method for anchors on a vehicle, an apparatus, and a computer-readable storage medium. The plurality of anchors are disposed on the vehicle, wireless communication is performed between the plurality of anchors, and the plurality of anchors include a first anchor and a second anchor. The communication method for the anchors on the vehicle includes: after a wireless connection is established between the first anchor and the second anchor, the first anchor transmits a first data frame with the second anchor, where channel coding is performed on the first data frame; and the first anchor transmits a first acknowledgement frame with the second anchor, where the first acknowledgement frame indicates whether the first data frame is correctly transmitted. The channel coding is performed on the data frame transmitted between the anchors, to ensure reliability of the wireless communication between the anchors. In addition, because the wireless communication is performed between the anchors, a power supply of the vehicle does not need to continuously supply power to the anchors, thereby reducing costs and power consumption of the vehicle.

## Description

This application claims priority to Chinese Patent Application No. 202310456017.7, filed with the China National Intellectual Property Administration on April 14, 2023 and entitled "COMMUNICATION METHOD FOR ANCHORS ON VEHICLE, APPARATUS, AND COMPUTER-READABLE STORAGE MEDIUM", which is incorporated herein by reference in its entirety.

### TECHNICAL FIELD

Embodiments of this application relate to the vehicle field, and in particular, to a communication method for anchors on a vehicle, an apparatus, and a computer-readable storage medium.

### BACKGROUND

As vehicles develop and people raise higher requirements on driving experience, a vehicle key evolves from a mechanical key to an electronic key. When a driver presses a key button or approaches the vehicle with a device like a key or a mobile phone, the vehicle can be unlocked.

To implement such a function, a corresponding system is required on the vehicle for cooperation. Usually, a plurality of anchors are disposed on the vehicle, and these anchors have similar functions or complementarily cooperate with each other to jointly complete a complex task, for example, detect whether the device like an electronic key or the mobile phone approaches the vehicle.

Currently, the plurality of anchors are connected in a wired manner. However, the anchors are arranged in different positions, which makes cabling design and installation of the entire vehicle complex, and results in both high power consumption and costs of the vehicle.

### SUMMARY

Embodiments of this application provide a communication method for anchors on a vehicle, an apparatus, and a computer-readable storage medium, to reduce power consumption and costs of the vehicle.

According to a first aspect, this application provides a communication method for anchors on a vehicle, applied to a first anchor in the plurality of anchors disposed on the vehicle, where wireless communication is performed between the plurality of anchors. The method includes: after a wireless connection is established between the first anchor and a second anchor in the plurality of anchors, transmitting a first data frame with the second anchor, where channel coding is performed on the first data frame; and transmitting a first acknowledgement frame with the second anchor, where the first acknowledgement frame indicates whether the first data frame is correctly transmitted.

In the foregoing manner, the wireless communication mode is used between the plurality of anchors on the vehicle. The channel coding is performed on the data frame transmitted between the anchors. Through the channel coding, redundancy check information is added to transmitted useful information, so that an error correction and/or error detection capability of the data frame is improved, thereby ensuring reliability of the wireless communication between the anchors. The acknowledgement frame of the data frame is further transmitted between the anchors, to determine whether the data frame is correctly transmitted. This further improves the reliability of the wireless communication between the anchors. Because the wireless communication is performed between the anchors, the anchor does not need to have a wired communication interface and a related chip, and the vehicle does not need to control a power supply to continuously supply power to the anchor, thereby reducing costs and power consumption of the vehicle.

In a possible design, the first data frame is a frame used to measure a distance between a vehicle key and the vehicle.

The foregoing manner may be applicable to an application scenario in which a user unlocks or locks the vehicle by using an electronic vehicle key. A position of the user may be determined by transmitting the first data frame, to implement accuracy of unlocking or locking the vehicle. In addition, because the wireless communication is performed between the anchors, the anchor can be disposed in a more reasonable position that facilitates ranging and positioning, for example, a position without signal blocking, for example, a top corner of the vehicle. This further improves accuracy, timeliness, and security of unlocking or locking the vehicle.

In a possible design, the channel coding includes a polar code.

In a possible design, the first acknowledgement frame indicates that the first data frame is not correctly transmitted, and the method further includes: retransmitting the first data frame with the second anchor.

In the foregoing manner, the first data frame is retransmitted, so that an opportunity of correctly transmitting the first data frame can be increased, and transmission reliability of the first data frame is improved.

**In** a possible design, the first acknowledgement frame indicates that the first data frame is correctly transmitted, and the method further includes: transmitting a third data frame with the second anchor, where the channel coding is performed on the third data frame; and transmitting a third acknowledgement frame with the second anchor, where the third acknowledgement frame indicates whether the third data frame is correctly transmitted.

**In** the foregoing manner, after the first data frame is correctly transmitted, another subsequent data frame may continue to be transmitted.

**In** a possible design, the transmitting the first data frame with the second anchor includes: sending the first data frame to the second anchor; and the transmitting the first acknowledgement frame with the second anchor includes: receiving the first acknowledgement frame sent by the second anchor.

In the foregoing manner, the first anchor sends the first data frame to the second anchor.

In a possible design, the sending the first data frame to the second anchor includes: sending the first data frame to the second anchor at first power, where the first power is greater than a preset reference power value.

In the foregoing manner, large transmit power is used, so that a success rate of correctly transmitting the first data frame is improved, and the reliability of the wireless communication between the anchors is improved.

In a possible design, the transmitting the first data frame with the second anchor includes: receiving the first data frame sent by the second anchor; and the transmitting the first acknowledgement frame with the second anchor includes: sending the first acknowledgement frame to the second anchor.

In the foregoing manner, the second anchor sends the first data frame to the first anchor.

In a possible design, before sending the first acknowledgement frame to the second anchor, further including: performing integrity verification on the first data frame, to determine whether the integrity verification succeeds, where when the integrity verification succeeds, the first acknowledgement frame indicates that the first data frame is correctly transmitted; or when the integrity verification fails, the first acknowledgement frame indicates that the first data frame is not correctly transmitted.

**In** the foregoing manner, integrity verification is performed on the first data frame, so that the reliability of the wireless communication between the anchors is further improved.

**In** a possible design, the first acknowledgement frame indicates that the first data frame is correctly transmitted, and the method further includes: performing authentication verification and/or decryption verification on the first data frame.

In the foregoing manner, authentication verification and/or decryption verification are/is performed on the first data frame, so that the reliability and the security of the wireless communication between the anchors are further improved.

In a possible design, the method further includes: sending a second data frame to at least one other anchor than the first anchor in the plurality of anchors, where the second data frame is used to determine that a wireless connection between the first anchor and the other anchor is normal; and receiving a second acknowledgement frame sent by the at least one other anchor, where the second acknowledgement frame indicates whether the second data frame is correctly transmitted.

In the foregoing manner, the second data frame is sent, so that whether the wireless connection between the first anchor and the other anchor is normal can be determined, to ensure that wireless communication can be normally performed between the first anchor and the other anchor, thereby improving the reliability of the wireless communication between the anchors.

In a possible design, there are at least two other anchors, and the sending the second data frame to the at least one other anchor than the first anchor in the plurality of anchors includes: sending a multicast data frame to the at least one other anchor through multicast, where the multicast data frame includes a second data frame corresponding to each other anchor.

In the foregoing manner, the first anchor sends the second data frame through multicast, so that a data transmission amount is reduced, and data transmission efficiency is improved.

In a possible design, the receiving the second acknowledgement frame sent by the at least one other anchor includes: sequentially receiving, based on a preset order or preset sending time of the at least one other anchor, a second acknowledgement frame sent by each of the at least one other anchor.

In a possible design, the plurality of anchors include a primary anchor and a secondary anchor, the primary anchor is connected to a control system of the vehicle through a bus, the first anchor is the primary anchor, and the other anchor is the secondary anchor.

In the foregoing manner, the primary anchor is connected to the control system of the vehicle through the bus, the secondary anchor is not connected to the control system of the vehicle through the bus, and wireless communication can be performed between the secondary anchor and the primary anchor. Therefore, the primary anchor plays a more important role. The primary anchor sends the second data frame to the secondary anchor, so that whether the wireless connection between the primary anchor and the secondary anchor is normal can be determined, thereby further improving the reliability of the wireless communication between the anchors.

In a possible design, the wireless communication includes at least one of the following: SparkLink communication, Bluetooth communication, or Wi-Fi communication.

According to a second aspect, this application provides an anchor, used as a first anchor in a plurality of anchors disposed on a vehicle, where wireless communication is performed between the plurality of anchors, and the first anchor includes: a transmission module: configured to: after a wireless connection is established between the first anchor and a second anchor in the plurality of anchors, transmit a first data frame with the second anchor, where channel coding is performed on the first data frame, where the transmission module is further configured to transmit a first acknowledgement frame with the second anchor, where the first acknowledgement frame indicates whether the first data frame is correctly transmitted.

In a possible design, the first data frame is a frame used to measure a distance between a vehicle key and the vehicle.

In a possible design, the channel coding includes a polar code.

In a possible design, the first acknowledgement frame indicates that the first data frame is not correctly transmitted, and the transmission module is further configured to retransmit the first data frame with the second anchor.

In a possible design, the first acknowledgement frame indicates that the first data frame is correctly transmitted, and the transmission module is further configured to: transmit a third data frame with the second anchor, where the channel coding is performed on the third data frame; and transmit a third acknowledgement frame with the second anchor, where the third acknowledgement frame indicates whether the third data frame is correctly transmitted.

In a possible design, the transmission module includes a sending module and a receiving module; the sending module is configured to send the first data frame to the second anchor; and the receiving module is configured to receive the first acknowledgement frame sent by the second anchor.

In a possible design, the sending module is configured to send the first data frame to the second anchor at first power, where the first power is greater than a preset reference power value.

In a possible design, the transmission module includes a sending module and a receiving module; the receiving module is configured to receive the first data frame sent by the second anchor; and the sending module is configured to send the first acknowledgement frame to the second anchor.

In a possible design, an integrity verification module is further included. The integrity verification module is configured to: before the sending module sends the first acknowledgement frame to the second anchor, perform integrity verification on the first data frame, to determine whether the integrity verification succeeds, where when the integrity verification succeeds, the first acknowledgement frame indicates that the first data frame is correctly transmitted; or when the integrity verification fails, the first acknowledgement frame indicates that the first data frame is not correctly transmitted.

In a possible design, a security module is further included. The security module is configured to: when the first acknowledgement frame indicates that the first data frame is correctly transmitted, perform authentication verification and/or decryption verification on the first data frame.

In a possible design, the transmission module includes the sending module and the receiving module; the sending module is further configured to send a second data frame to at least one other anchor than the first anchor in the plurality of anchors, where the second data frame is used to determine that a wireless connection between the first anchor and the other anchor is normal; and the receiving module is further configured to receive a second acknowledgement frame sent by the at least one other anchor, where the second acknowledgement frame indicates whether the second data frame is correctly transmitted.

In a possible design, there are at least two other anchors, and the sending module is configured to: send a multicast data frame to the at least one other anchor through multicast, where the multicast data frame includes a second data frame corresponding to each other anchor.

In a possible design, the receiving module is configured to: sequentially receive, based on a preset order or preset sending time of the at least one other anchor, a second acknowledgement frame sent by each of the at least one other anchor.

In a possible design, the plurality of anchors include a primary anchor and a secondary anchor, the primary anchor is connected to a control system of the vehicle through a bus, the first anchor is the primary anchor, and the other anchor is the secondary anchor.

In a possible design, the wireless communication includes at least one of the following: SparkLink communication, Bluetooth communication, or Wi-Fi communication.

According to a third aspect, an apparatus is provided, including a processor. The processor is configured to: be coupled to a memory, read instructions in the memory, and enable, according to the instructions, the apparatus to perform the method according to the first aspect.

According to a fourth aspect, this application provides a chip system. The chip system includes a processor, configured to implement the method according to the first aspect. In a possible design, the chip system further includes a memory, configured to store program instructions and/or data. The chip system may include a chip, or may include a chip and another discrete component.

According to a fifth aspect, a computer program product is provided. The computer program product includes computer program code, and when the computer program code is run, the method according to the first aspect is implemented.

According to a sixth aspect, this application provides a computer-readable storage medium. The computer-readable storage medium stores a computer program, and when the computer program is run, the method according to the first aspect is implemented.

According to a seventh aspect, this application provides a vehicle, including the anchor according to the second aspect, and wireless communication is performed between a plurality of anchors.

According to an eighth aspect, this application provides a vehicle, including the apparatus according to the third aspect. The apparatus may be an anchor, and wireless communication is performed between a plurality of anchors.

### BRIEF DESCRIPTION OF DRAWINGS

FIG. 1A to FIG. 1C are a group of diagrams of positions of anchors on a vehicle according to an embodiment of this application;
FIG. 2A and FIG. 2B are a group of diagrams in which a user unlocks a vehicle according to an embodiment of this application;
FIG. 3A to FIG. 3C are a group of diagrams in which anchors on a vehicle perform wired communication according to an embodiment of this application;
FIG. 4A to FIG. 4C are a group of diagrams in which anchors on a vehicle perform wireless communication according to an embodiment of this application;
FIG. 5 is a flowchart of a communication method for anchors on a vehicle according to an embodiment of this application;
FIG. 6 is another flowchart of a communication method for anchors on a vehicle according to an embodiment of this application;
FIG. 7 is still another flowchart of a communication method for anchors on a vehicle according to an embodiment of this application;
FIG. 8 is yet another flowchart of a communication method for anchors on a vehicle according to an embodiment of this application;
FIG. 9 is still yet another flowchart of a communication method for anchors on a vehicle according to an embodiment of this application;
FIG. 10 is a further flowchart of a communication method for anchors on a vehicle according to an embodiment of this application;
FIG. 11 is a diagram of a structure of an anchor on a vehicle according to an embodiment of this application; and
FIG. 12 is a diagram of a structure of an apparatus according to an embodiment of this application.

### DESCRIPTION OF EMBODIMENTS

To make objectives, technical solutions, and advantages of this application clearer, the following further describes this application in detail with reference to accompanying drawings. Specific operation methods, function descriptions, and the like in method embodiments may also be applied to apparatus embodiments or system embodiments.

A communication method for anchors on a vehicle provided in this application may be applied to communication between components on the vehicle. The plurality of components have similar or complementary functions and cooperate with each other to complete a complex task. A quantity of components and a type, a name, a structure, and a position of disposing the component on the vehicle are not limited in this application. For example, the component is also referred to as a communication node, a communication module, a node, a module, or the like. For ease of description, an example in which the component is an anchor, and the complex task is that a user unlocks or locks the vehicle by using an electronic vehicle key is used for description.

A plurality of anchors are disposed on the vehicle, the plurality of anchors include a primary anchor and a secondary anchor, and the primary anchor is connected to a control system of the vehicle through a bus. The bus is, for example, a controller area network (controller area network, CAN) bus or a local interconnect network (local interconnect network, LIN) bus. The anchor is a communication node, and different anchors may communicate with each other to transmit data and instructions. In an application scenario in which the user unlocks or locks the vehicle by using the electronic vehicle key, the anchor has at least a ranging function, may obtain ranging information/position information/positioning information of the electronic vehicle key, and transmit the information, so that the control system of the vehicle determines, based on the information, whether to unlock or lock the vehicle. The plurality of anchors are disposed on the vehicle, so that a distance between the user and the vehicle can be detected from a plurality of directions. This improves accuracy, timeliness, and security of unlocking or locking the vehicle or unlocking or locking of the vehicle when the user approaches a vehicle door.

The electronic vehicle key may be in a plurality of forms. For example, the electronic vehicle key is a vehicle key matching the vehicle, and the vehicle key has a vehicle unlocking button and a vehicle locking button. For another example, the electronic vehicle key is a portable electronic device that can be carried by the user, for example, a mobile phone or a watch. Optionally, an application (application, APP) used to manage the vehicle may be installed on the portable electronic device. In some implementations, when the user presses the vehicle unlocking button on the vehicle key, the vehicle may be unlocked. In some other implementations, when the user approaches the vehicle with the vehicle key or the portable electronic device, the vehicle may be unlocked.

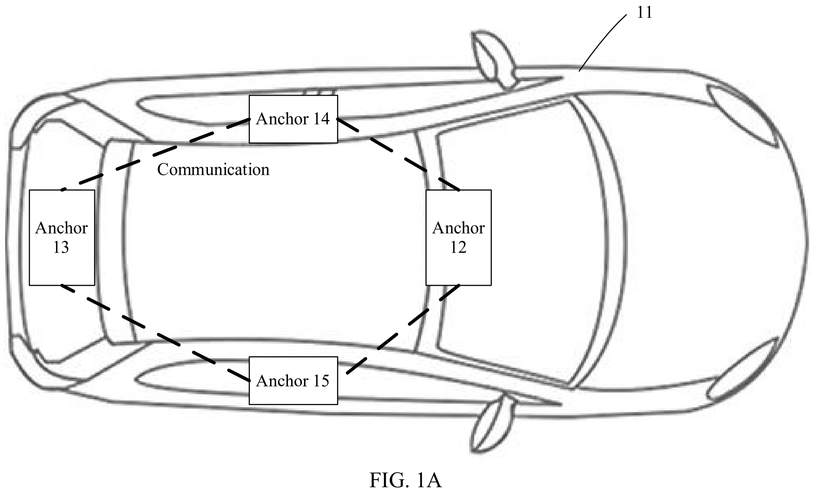

The following describes disposing of the anchor on the vehicle by using an example with reference to FIG. 1A to FIG. 1C.

For example, as shown in FIG. 1A, four anchors are disposed on a vehicle 11, and are respectively marked as an anchor 12 to an anchor 15. The anchor 12 is a primary anchor, and is located near a rearview mirror inside the vehicle. The anchor 13 to the anchor 15 are secondary anchors, and are respectively located near a rear window of the vehicle and on two sides of a housing of the vehicle. As shown by dashed lines in FIG. 1A, the anchor 13 may communicate with the anchor 14 and the anchor 15, and the anchor 14 and the anchor 15 may further communicate with the anchor 12. In this example, the anchor 12 may communicate with the anchor 13 through the anchor 14 or the anchor 15.

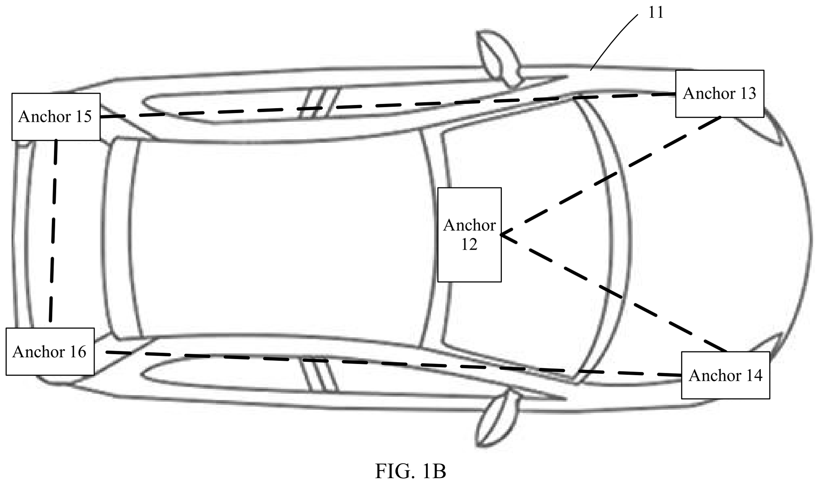

For another example, as shown in FIG. 1B, five anchors are disposed on the vehicle 11, and are respectively marked as an anchor 12 to an anchor 16. The anchor 12 is a primary anchor. The anchor 13 to the anchor 16 are secondary anchors. The anchor 13 and the anchor 14 are located near headlamps of the vehicle, and the anchor 15 and the anchor 16 are located near rear lamps of the vehicle. The anchor 12 may communicate with the anchor 13 and the anchor 14, the anchor 15 may communicate with the anchor 13 and the anchor 16, and the anchor 16 may further communicate with the anchor 14.

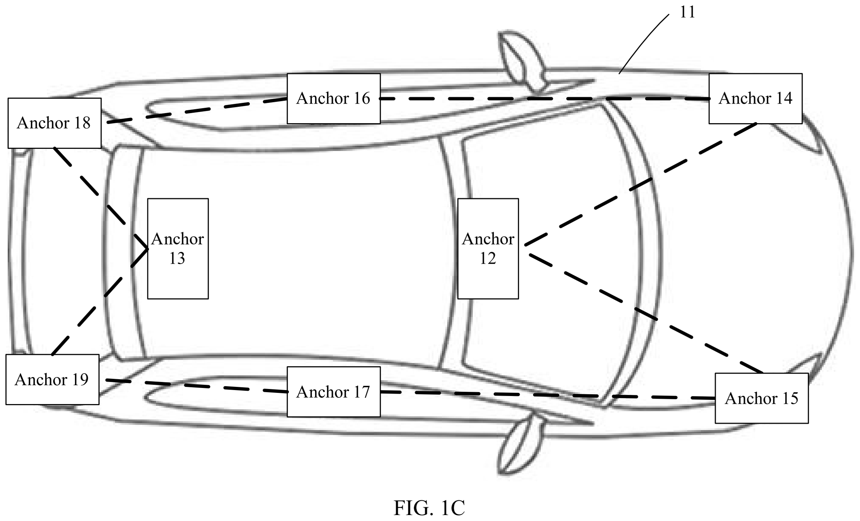

For still another example, as shown in FIG. 1C, eight anchors are disposed on the vehicle 11, and are respectively marked as an anchor 12 to an anchor 19. The anchor 12 is a primary anchor. The anchor 13 to the anchor 19 are secondary anchors. The anchor 14 and the anchor 15 are located near the headlamps of the vehicle, the anchor 18 and the anchor 19 are located near the rear lamps of the vehicle, the anchor 16 and the anchor 17 are located near middle positions on the two sides of the vehicle, and the anchor 13 is located under a rear end of the vehicle. The anchor 12 may communicate with the anchor 14 and the anchor 15, the anchor 16 may communicate with the anchor 14 and the anchor 18, the anchor 17 may communicate with the anchor 15 and the anchor 19, and the anchor 13 may communicate with the anchor 18 and the anchor 19.

It should be noted that a quantity of anchors, positions of the anchors on the vehicle, and anchors that can communicate with each other in FIG. 1A to FIG. 1C are merely examples for description, are not limited thereto, and in actual application, may be determined based on factors such as a vehicle size, an anchor communication mode, anchor cable connection complexity, and anchor transmit power.

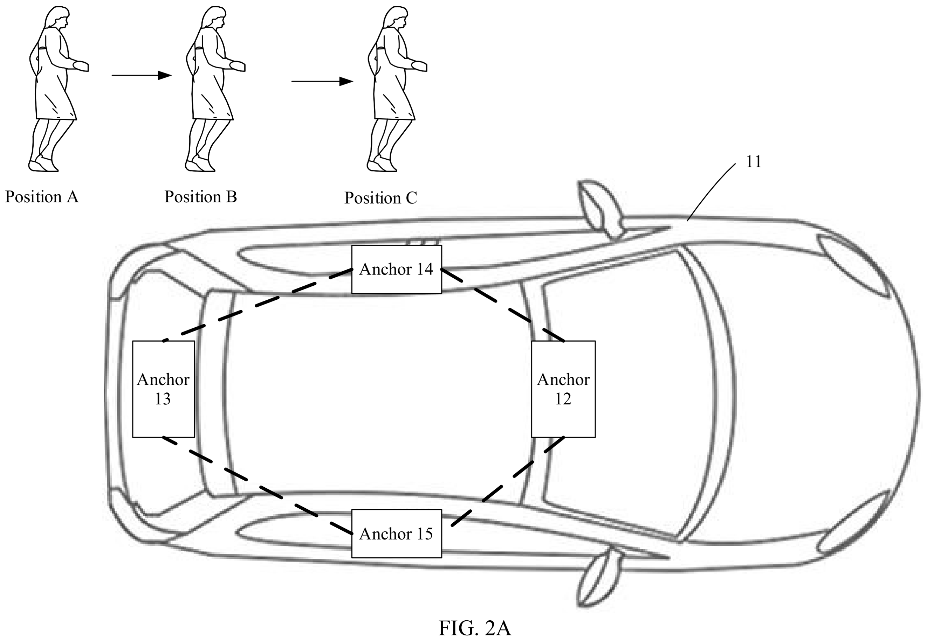

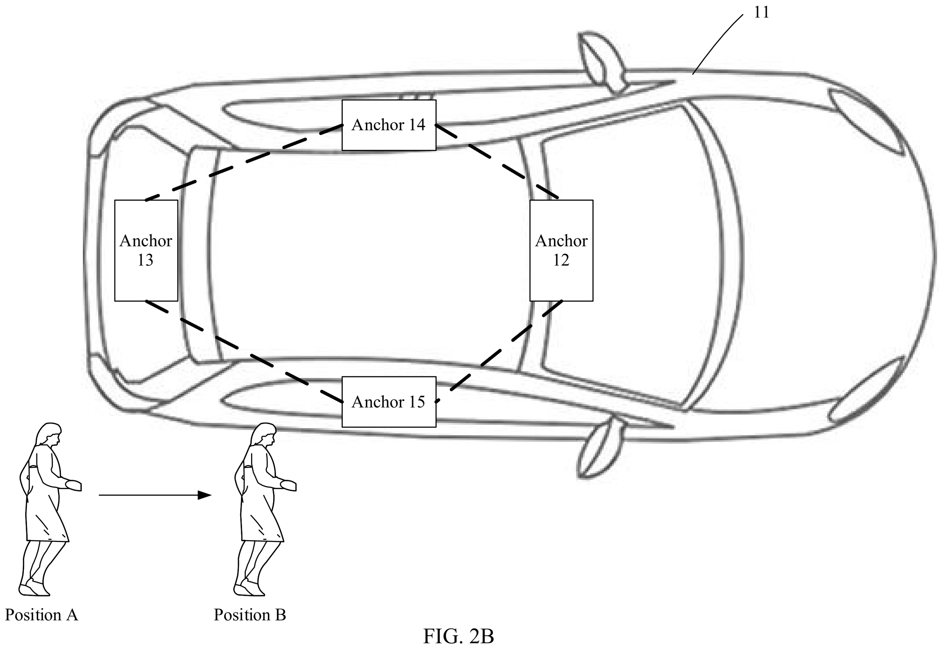

It is assumed that four anchors are disposed on a vehicle, for example, as shown in FIG. 1A. The following describes, by using an example with reference to FIG. 2A and FIG. 2B, an application scenario in which a user unlocks a vehicle by using a vehicle key.

For example, as shown in FIG. 2A, the user walks from back to front on a left side of the vehicle with the vehicle key. When the user walks to a position A, an anchor 13 obtains position information 1 of the user, and may send the position information 1 to an anchor 14. The anchor 14 sends the position information 1 to a primary anchor 12, and determines that the user approaches the vehicle. The user continues to walk. The anchor 13 obtains position information 2 of the user in real time, and the anchor 14 obtains position information 3 of the user in real time. Through communication between the anchors, the anchor 12 obtains the position information 2 and the position information 3, and determines that the user is located in a position B and continues to move. The user continues to walk, and the anchor on the vehicle continues to obtain the position information of the user in real time. When it is determined that the user is located in a position C (close to a front door of the vehicle), a control system of the vehicle unlocks the front door on the left side of the vehicle.

For another example, as shown in FIG. 2B, the user walks from back to front on a right side of the vehicle with the vehicle key. The anchors on the vehicle obtain the position information of the user in real time and communicate with each other. When it is determined that the user is located in a position B (close to a right rear door), the control system of the vehicle unlocks the rear door on the right side of the vehicle.

It should be noted that an implementation in which the anchor obtains the position information or implements the ranging function is not limited in this application. For example, the following technologies are used: a Bluetooth received signal strength indicator (received signal strength indicator, RSSI) ranging technology, a time of arrival (time of arrival, TOA) ranging technology, a Bluetooth channel sounding (Bluetooth channel sounding) technology, and the like.

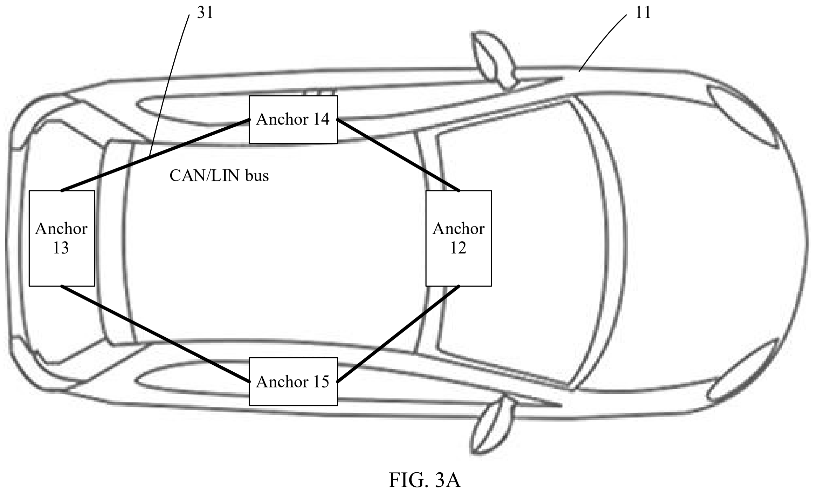

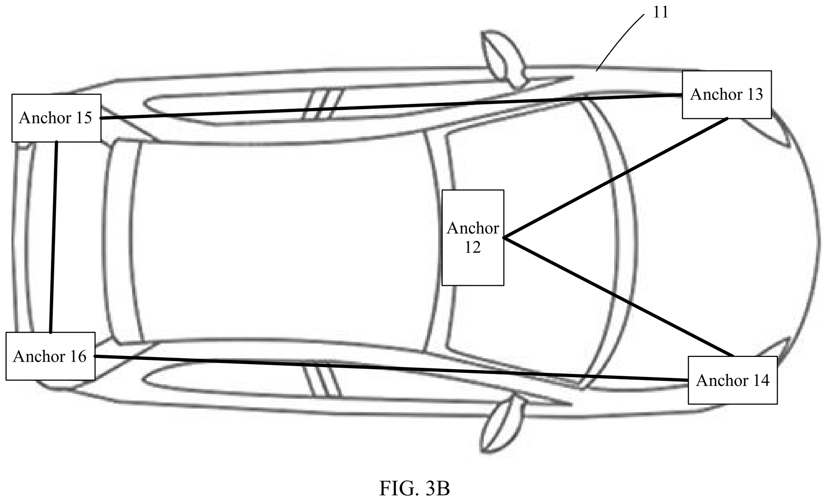

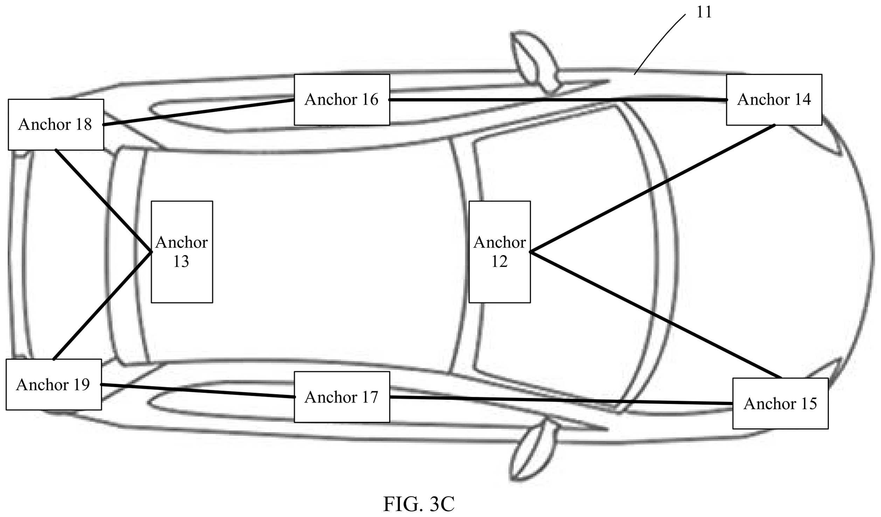

In a related technology, wired communication is performed between anchors disposed on a vehicle. For example, FIG. 3A to FIG. 3C are a group of diagrams in which anchors on a vehicle perform wired communication according to an embodiment of this application. As shown in FIG. 3A to FIG. 3C, a plurality of anchors are disposed on a vehicle 11, each anchor is connected to a CAN bus or an LIN bus, a primary anchor is connected to a control system of the vehicle through the CAN/LIN bus, and wired communication is performed between the anchors through the CAN/LIN bus 31. For a quantity of anchors, positions of disposing the anchors, and anchors that communicate with each other, FIG. 3A is the same as FIG. 1A, FIG. 3B is the same as FIG. 1B, and FIG. 3C is the same as FIG. 1C. Details are not described herein again.

The wired communication can ensure reliability of communication between the anchors. However, the anchor needs to have a CAN/LIN bus interface and a related chip, which increases costs of the anchor. The anchors are arranged in different positions on the vehicle, which makes cabling design and installation on the vehicle more complex. Cabling needs to pass through the anchors of the entire vehicle, which increases a weight of the vehicle. In addition, to maintain operation of the anchors in different positions on the vehicle, the entire vehicle needs to control a power supply to be continuously powered on, which increases power consumption of the vehicle.

This application provides a communication method for anchors on a vehicle in which a wireless communication mode is used between anchors. Channel coding is performed on a data frame transmitted between the anchors. Through the channel coding, redundancy check information is added to transmitted useful information, so that an error correction and/or error detection capability of the data frame is improved, thereby ensuring reliability of wireless communication between the anchors. An acknowledgement frame of the data frame is further transmitted between the anchors, to determine whether the data frame is correctly transmitted. This further improves the reliability of the wireless communication between the anchors. In addition, because the wireless communication is performed between the anchors, the anchor does not need to have a wired communication interface and a related chip, and the vehicle does not need to control a power supply to continuously supply power to the anchor, thereby reducing costs and power consumption of the vehicle. A power supply manner of the anchor is more flexible. For example, various types of batteries are used to supply power. For another example, partitioned power supply is used, and power supply is periodically woken up. Because vehicle cabling does not need to be considered, complexity of vehicle cabling is reduced, and a position in which the anchor is disposed on the vehicle is more flexible. In an application scenario in which a user unlocks or locks the vehicle by using an electronic vehicle key, the anchor may be disposed in a more reasonable position facilitates ranging and positioning, for example, a position without signal blocking, for example, a top corner of the vehicle. This ensures accuracy, timeliness, and security of unlocking or locking the vehicle.

The wireless communication includes but is not limited to at least one of the following: SparkLink (SparkLink) communication, Bluetooth (Bluetooth) communication, or wireless fidelity (wireless fidelity, Wi-Fi) communication. SparkLink communication is a short-range wireless communication mode, can meet technical requirements for low latency, high reliability, precise synchronization, and multi-concurrency in a plurality of scenarios such as intelligent vehicles, industrial intelligent manufacturing, smart homes, and personal wearables. In SparkLink communication, a management node can control a limited quantity of managed nodes to form a communication function.

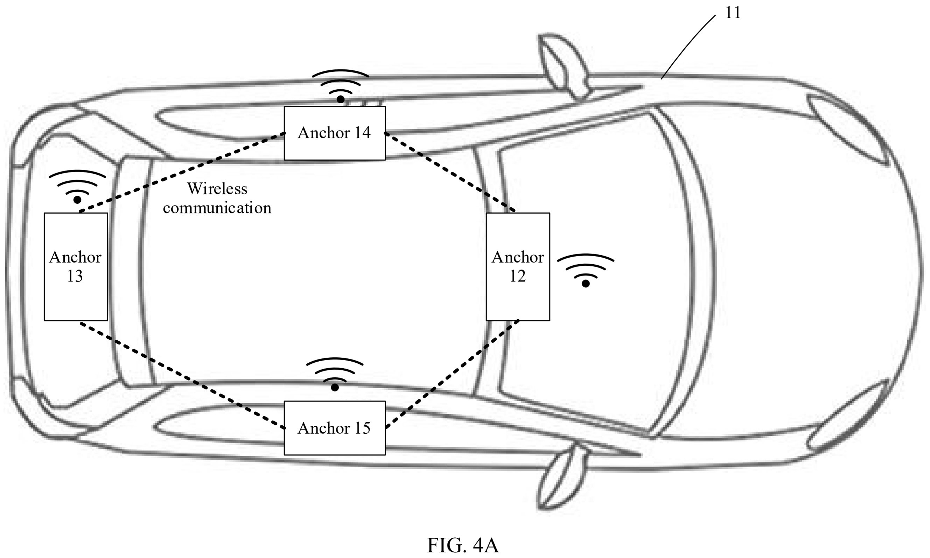

For example, FIG. 4A to FIG. 4C are a group of diagrams in which anchors on a vehicle perform wireless communication according to an embodiment of this application.

For example, as shown in FIG. 4A, four anchors are disposed on a vehicle 11, and are respectively marked as an anchor 12 to an anchor 15. The anchor 12 is a primary anchor, and is connected to a control system of the vehicle through a CAN bus or an LIN bus. The anchor 13 to the anchor 15 are secondary anchors, and wireless communication may be performed between the secondary anchor and the primary anchor. Positions of the anchors and anchors that communicate with each other are the same as those in FIG. 1A or FIG. 3A. A difference between FIG. 4A and FIG. 3A lies in that in FIG. 4A, wireless communication is performed between the anchors.

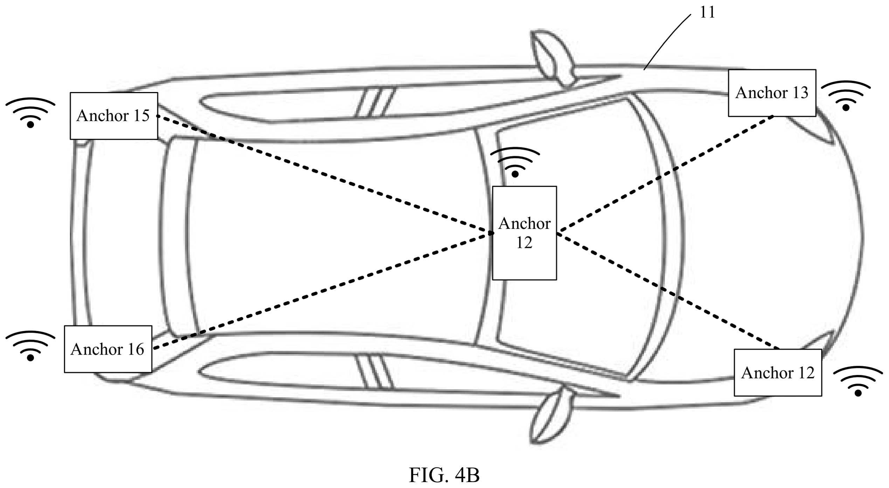

For another example, as shown in FIG. 4B, five anchors are disposed on the vehicle 11, and are respectively marked as an anchor 12 to an anchor 16. Positions of disposing the anchors are the same as those in FIG. 1B or FIG. 3B. The anchor 12 is a primary anchor, and is connected to the control system of the vehicle through the CAN bus or the LIN bus. The anchor 13 to the anchor 16 are secondary anchors. Wireless communication may be performed between the anchors. In this example, the wireless communication mode is more flexible, and cabling positions of the vehicle in wired communication does not need to be considered. Therefore, the anchors can communicate with each other more flexibly, and FIG. 4B is different from FIG. 1B or FIG. 3B. In FIG. 4B, the anchor 12 may communicate with the anchor 13 to the anchor 16.

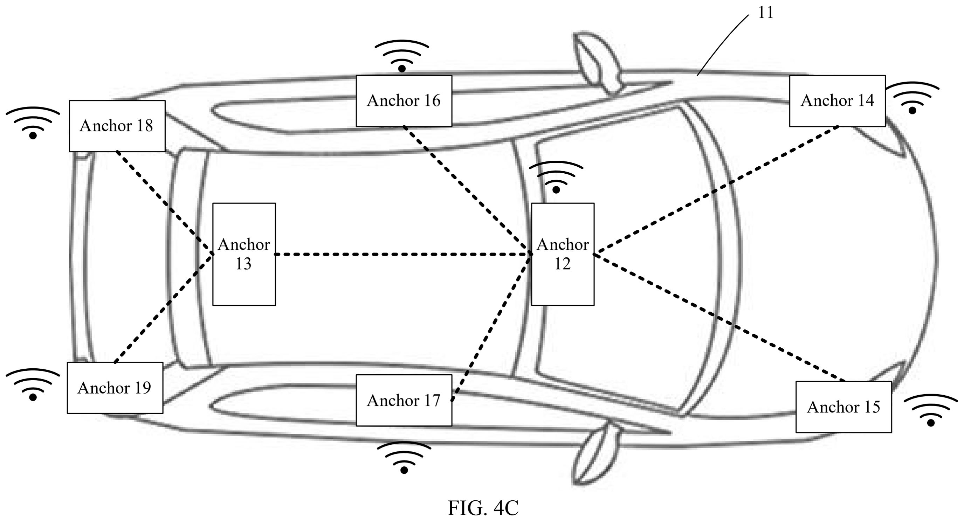

For still another example, as shown in FIG. 4C, eight anchors are disposed on the vehicle 11, and are respectively marked as an anchor 12 to an anchor 19. Positions of disposing the anchors are the same as those in FIG. 1C or FIG. 3C. The anchor 12 is a primary anchor, and is connected to the control system of the vehicle through the CAN bus or the LIN bus. The anchor 13 to the anchor 19 are secondary anchors. Wireless communication may be performed between the anchors, the anchors can communicate with each other more flexibly, and FIG. 4C is different from FIG. 1C or FIG. 3C. In FIG. 4C, the anchor 12 may communicate with the anchor 13 to the anchor 17, and the anchor 13 may also communicate with the anchor 18 and the anchor 19.

It should be noted that a quantity of anchors, positions of the anchors on the vehicle, and anchors that can communicate with each other in the wireless mode in FIG. 4A to FIG. 4C are merely examples for description, and are not limited thereto.

The following describes in detail the technical solutions of this application by using specific embodiments.

An "embodiment" mentioned in the specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment.

Terms "first", "second", "third", "fourth", and the like (if any) in embodiments of this application are used to distinguish between similar objects, but do not necessarily indicate a specific order or sequence.

In embodiments of this application, "include" may indicate an inclusion relationship, or an equal relationship. For example, if A includes B, A may include other content in addition to B, or A and B are the same content.

In descriptions of this application, unless otherwise specified, a character "/" indicates an "or" relationship between associated objects. For example, A/B may indicate A or B. In this application, a term "and/or" describes only an association relationship between the associated objects and indicates that three relationships may exist. For example, A and/or B may indicate three cases: Only A exists, both A and B exist, and only B exists, where A and B may be singular or plural. In addition, in the descriptions of this application, "a plurality of" means two or more unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, use of the term example is intended to present a concept in a specific manner.

It should be noted that, in embodiments of this application, correct transmission and successful transmission have a same meaning, and may be interchangeable.

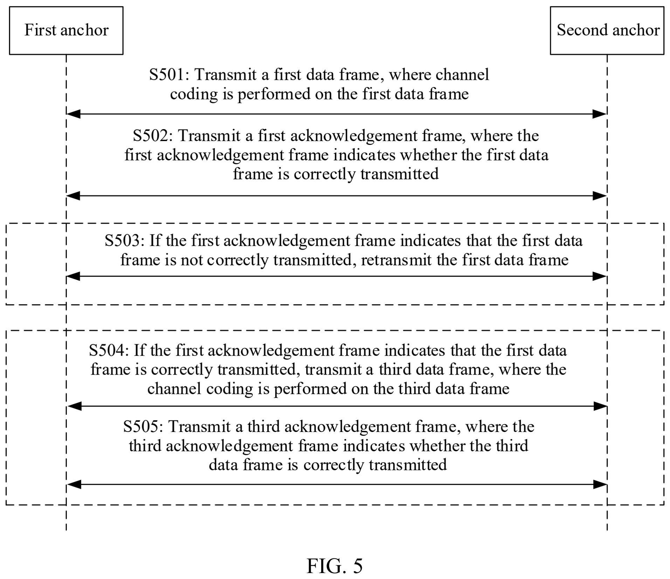

FIG. 5 is a flowchart of a communication method for anchors on a vehicle according to an embodiment of this application. The communication method for the anchors on the vehicle provided in this embodiment is performed by any one of the plurality of anchors disposed on the vehicle. Wireless communication is performed between the plurality of anchors, and the wireless communication includes at least one of the following: SparkLink communication, Bluetooth communication, or Wi-Fi communication. For ease of distinguishing, the plurality of anchors disposed on the vehicle include a first anchor and a second anchor, and the first anchor and the second anchor are any two anchors that can perform wireless communication in the plurality of anchors.

As shown in FIG. 5, the communication method for the anchors on the vehicle provided in this embodiment may include the following steps.

S501: The first anchor transmits a first data frame with the second anchor, where channel coding is performed on the first data frame.

Specifically, after a wireless connection is established between the first anchor and the second anchor, the first anchor and the second anchor may perform wireless communication to transmit the first data frame. A process of establishing the wireless connection is not limited in this embodiment, and may vary with a wireless communication mode. Transmission includes sending or receiving. The channel coding is performed on the transmitted first data frame. Through the channel coding, redundancy check information is added to transmitted useful information, so that an error correction and/or error detection capability of the first data frame is improved, thereby ensuring reliability of the wireless communication between the anchors.

Optionally, the first data frame is a frame used to measure a distance between a vehicle key and the vehicle.

Specifically, in an application scenario in which a user unlocks or locks the vehicle by using an electronic vehicle key, a ranging function may be implemented by transmitting the first data frame between the anchors. For example, the first data frame may include ranging information/position information/positioning information. Optionally, the first data frame may be a ranging control frame.

Optionally, the channel coding includes a polar (polar) code.

The channel coding may further include another coding scheme. This is not limited in this embodiment.

S502: The first anchor transmits a first acknowledgement frame with the second anchor, where the first acknowledgement frame indicates whether the first data frame is correctly transmitted.

The first acknowledgement frame is transmitted, so that it can be clearly determined whether the first data frame is correctly transmitted, thereby further improving the reliability of the wireless communication between the anchors.

Optionally, the first acknowledgement frame may include an acknowledgement (acknowledgement, ACK) or a negative acknowledgement (negative acknowledgement, NACK). The ACK indicates that the first data frame is correctly transmitted, and the NACK indicates that the first data frame is not correctly transmitted.

Optionally, the first acknowledgement frame may include 1-bit acknowledgement information, and a value of the 1-bit acknowledgement information may be 0 or 1. A value of 1 indicates that the first data frame is correctly transmitted, and a value of 0 indicates that the first data frame is not correctly transmitted; or a value of 0 indicates that the first data frame is correctly transmitted, and a value of 1 indicates that the first data frame is not correctly transmitted.

Optionally, if the first acknowledgement frame indicates that the first data frame is not correctly transmitted, S503 is subsequently performed.

Optionally, if the first acknowledgement frame indicates that the first data frame is correctly transmitted, S504 and S505 may be subsequently performed.

It can be learned that, according to the communication method for the anchors on the vehicle provided in this embodiment, the plurality of anchors are disposed on the vehicle, and the wireless communication may be performed between the plurality of anchors. The first data frame and the first acknowledgement frame for the first data frame are transmitted between the first anchor and the second anchor, and the channel coding is performed on the first data frame, so that anti-interference performance of the first data frame is improved, thereby ensuring the reliability of the wireless communication between the anchors. In addition, the wireless communication mode is used between the anchors, so that the anchor does not need to have a wired communication interface and a related chip, and the vehicle does not need to control a power supply to continuously supply power to the anchor, thereby avoiding complex cabling, and reducing costs and power consumption of the vehicle. Moreover, accuracy and reasonableness of disposing the anchor are improved, and in the scenario in which the user unlocks or locks the vehicle by using the electronic vehicle key, accuracy, timeliness, and security of unlocking or locking the vehicle are improved.

Optionally, the communication method for the anchors on the vehicle provided in this embodiment may further include the following steps.

S503: If the first acknowledgement frame indicates that the first data frame is not correctly transmitted, the first anchor retransmits the first data frame with the second anchor.

The channel coding is performed on the retransmitted first data frame. A process of retransmitting the first data frame is similar to that in S501 and S502. Details are not described herein again.

The first data frame is retransmitted, so that an opportunity of correctly transmitting the first data frame can be increased, and transmission reliability of the first data frame is improved.

Optionally, a maximum quantity of retransmissions may be set. When a quantity of retransmissions reaches the maximum quantity of retransmissions, transmission of the first data frame is stopped.

S504: If the first acknowledgement frame indicates that the first data frame is correctly transmitted, the first anchor transmits a third data frame with the second anchor, where the channel coding is performed on the third data frame.

S505: The first anchor transmits a third acknowledgement frame with the second anchor, where the third acknowledgement frame indicates whether the third data frame is correctly transmitted.

A principle of the third data frame is similar to that of the first data frame, and a principle of the third acknowledgement frame is similar to that of the first acknowledgement frame. After the first data frame is correctly transmitted, another subsequent data frame, for example, the third data frame, may continue to be transmitted. For transmission of the third data frame, refer to S501 and S502. Details are not described herein again.

The following describes a transmission direction of the first data frame transmitted between the first anchor and the second anchor in S501 and S502.

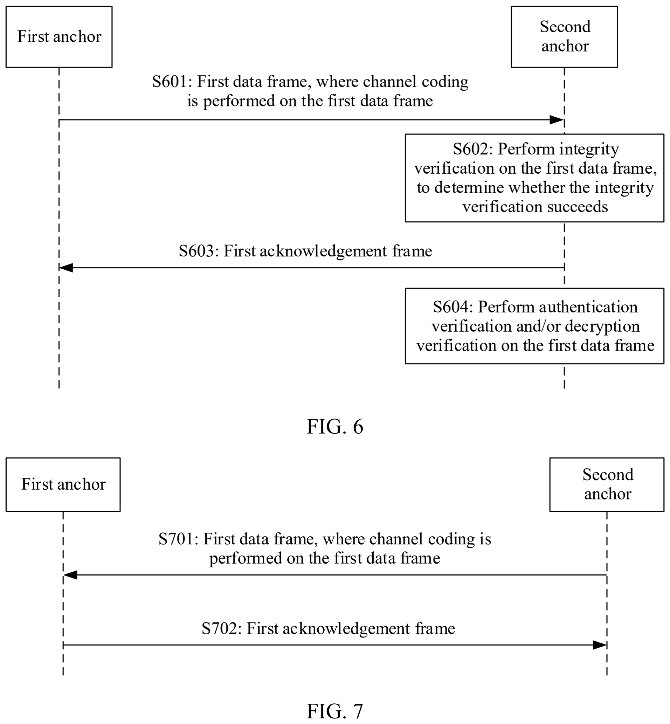

Optionally, in an implementation, the first anchor sends the first data frame to the second anchor. FIG. 6 is another flowchart of a communication method for anchors on a vehicle according to an embodiment of this application. As shown in FIG. 6, the communication method for the anchors on the vehicle may include the following steps.

S601: A first anchor sends a first data frame to a second anchor, where channel coding is performed on the first data frame.

Correspondingly, the second anchor receives the first data frame sent by the first anchor.

Refer to the related descriptions in S501. Details are not described herein again.

Optionally, that the first anchor sends the first data frame to the second anchor may include:
sending the first data frame to the second anchor at first power, where the first power is greater than a preset reference power value.

It should be noted that a specific value of the preset reference power value is not limited in this embodiment.

The first anchor sends the first data frame at the first power greater than the preset reference power value. Large transmit power is used, so that a success rate of correctly transmitting the first data frame is improved, and reliability of the wireless communication between the anchors is improved.

S602: The second anchor performs integrity verification on the first data frame, to determine whether the integrity verification succeeds.

When the integrity verification succeeds, a first acknowledgement frame indicates that the first data frame is correctly transmitted; or when the integrity verification fails, the first acknowledgement frame indicates that the first data frame is not correctly transmitted.

The integrity verification may be performed by using a related technology in existing wireless communication, and integrity verification may vary with a wireless communication mode. This is not described in detail in this embodiment.

S603: The second anchor sends the first acknowledgement frame to the first anchor.

Correspondingly, the first anchor receives the first acknowledgement frame sent by the second anchor.

Refer to the related descriptions in S502. Details are not described herein again.

Optionally, in S602, the second anchor performs integrity verification on the first data frame, and if the integrity verification succeeds, the method may further include:

S604: The second anchor performs authentication verification and/or decryption verification on the first data frame.

The authentication verification and decryption verification may be performed by using a related technology in existing wireless communication, and authentication verification and decryption verification may vary with a wireless communication mode. This is not described in detail in this embodiment.

Authentication verification and/or decryption verification are/is performed on the first data frame, so that the reliability and security of the wireless communication between the anchors are further improved.

Optionally, in another implementation, the second anchor sends the first data frame to the first anchor. FIG. 7 is still another flowchart of a communication method for anchors on a vehicle according to an embodiment of this application. S501 includes S701, and S502 includes S702. As shown in FIG. 7, the communication method for the anchors on the vehicle may include the following steps.

S701: A second anchor sends a first data frame to a first anchor, where channel coding is performed on the first data frame.

Correspondingly, the first anchor receives the first data frame sent by the second anchor.

S702: The first anchor sends a first acknowledgement frame to the second anchor.

Correspondingly, the second anchor receives the first acknowledgement frame sent by the first anchor.

A transmission direction of the first data frame in the implementation shown in FIG. 7 is opposite to that in the implementation shown in FIG. 6. The operation of the first anchor in FIG. 7 is similar to that of the second anchor in FIG. 6, and the operation of the second anchor in FIG. 7 is similar to that of the first anchor in FIG. 6. Details are not described herein again.

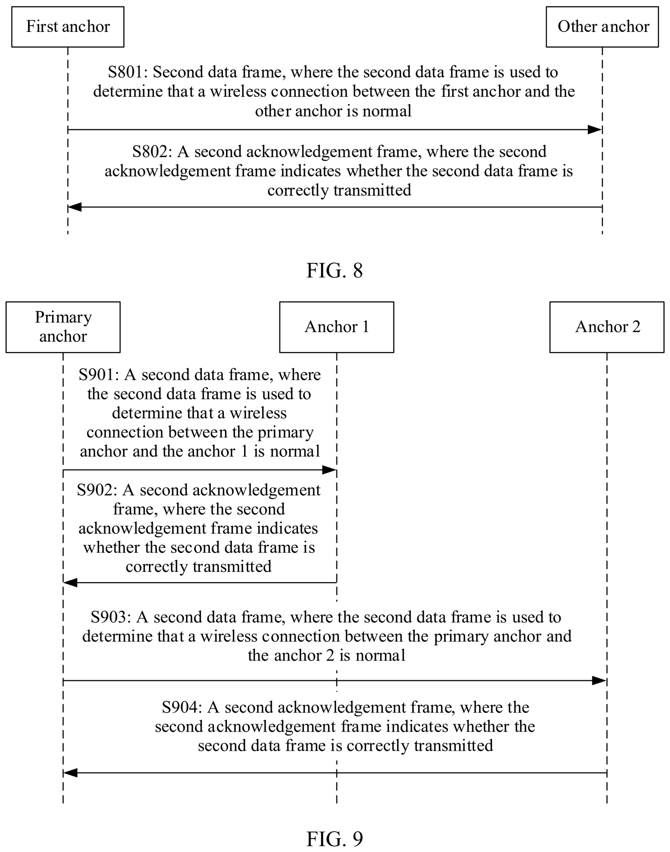

Optionally, refer to FIG. 8. The communication method for the anchors on the vehicle provided in this embodiment may further include the following steps.

S801: A first anchor sends a second data frame to at least one other anchor than the first anchor in the plurality of anchors, where the second data frame is used to determine that a wireless connection between the first anchor and the other anchor is normal.

Correspondingly, the at least one other anchor receives the second data frame sent by the first anchor.

The second data frame is sent, so that whether the wireless connection between the first anchor and the other anchor is normal can be determined, to ensure that wireless communication can be normally performed between the first anchor and the other anchor, thereby improving the reliability of the wireless communication between the anchors.

Optionally, the first anchor periodically sends the second data frame to the at least one other anchor than the first anchor in the plurality of anchors. A sending period of the second data frame is not limited in this embodiment.

Optionally, to reduce system communication load, a size of the second data frame may be as small as possible. Optionally, the second data frame may be an empty data packet.

A name of the second data frame is not limited in this embodiment. For example, the second data frame may be referred to as a heartbeat packet.

Optionally, the plurality of anchors include a primary anchor and a secondary anchor, and the primary anchor is connected to a control system of the vehicle through a bus. The first anchor is the primary anchor, and the other anchor is the secondary anchor.

The primary anchor is connected to the control system of the vehicle through the bus, the secondary anchor is not connected to the control system of the vehicle through the bus, and wireless communication can be performed between the secondary anchor and the primary anchor. Therefore, the primary anchor plays a more important role. The primary anchor may determine, by sending the second data frame to the secondary anchor, whether the wireless connection between the primary anchor and the secondary anchor is normal. In this way, in an application scenario in which a user unlocks or locks the vehicle by using an electronic vehicle key, it is ensured that the wireless communication between the anchors is normal, and all anchors can jointly complete a ranging function, to unlock or lock the vehicle, thereby improving the reliability of the wireless communication between the anchors, and improving accuracy, timeliness, and security of unlocking or locking the vehicle.

A quantity of the at least one other anchor is not limited in this embodiment, and may be one or more.

S802: The at least one other anchor sends a second acknowledgement frame to the first anchor, where the second acknowledgement frame indicates whether the second data frame is correctly transmitted.

Correspondingly, the first anchor receives the second acknowledgement frame sent by the at least one other anchor.

If the second acknowledgement frame indicates that the second data frame is correctly transmitted, the wireless connection between the first anchor and the other anchor is normal; or if the second acknowledgement frame indicates that the second data frame is not correctly transmitted, the wireless connection between the first anchor and the other anchor is abnormal. The second acknowledgement frame is transmitted, so that it can be clearly determined whether the second data frame is correctly transmitted and whether wireless communication between the first anchor and the other anchor is normal, thereby further improving the reliability of the wireless communication between the anchors.

A principle of the second acknowledgement frame is similar to that of the first acknowledgement frame. For details, refer to the related descriptions of the first acknowledgement frame. Details are not described herein again.

The following describes the implementations of S801 and S802 in a scenario in which there are at least two other anchors. For example, the first anchor is a primary anchor, and there are at least two other anchors, including an anchor 1 and an anchor 2.

Optionally, in an implementation, the first anchor sends a second data frame to each other anchor, and correspondingly, receives a second acknowledgement frame sent by each other anchor. FIG. 9 is still yet another flowchart of a communication method for anchors on a vehicle according to an embodiment of this application. As shown in FIG. 9, the following steps are included.

S901: A primary anchor sends a second data frame to an anchor 1, where the second data frame is used to determine that a wireless connection between the primary anchor and the anchor 1 is normal.

S902: The anchor 1 sends a second acknowledgement frame to the primary anchor, where the second acknowledgement frame indicates whether the second data frame is correctly transmitted.

The second data frame is a second data frame sent by the primary anchor to the anchor 1.

S903: The primary anchor sends a second data frame to an anchor 2, where the second data frame is used to determine that a wireless connection between the primary anchor and the anchor 2 is normal.

S904: The anchor 2 sends a second acknowledgement frame to the primary anchor, where the second acknowledgement frame indicates whether the second data frame is correctly transmitted.

The second data frame is a second data frame sent by the primary anchor to the anchor 2.

A sequence of performing S902 to S904 is not limited in this embodiment. However, S902 is performed after S901, and S904 is performed after S903.

Optionally, in another implementation, the first anchor sends a multicast data frame to the at least one other anchor through multicast, where the multicast data frame includes a second data frame corresponding to each other anchor. The at least one other anchor sequentially sends a second acknowledgement frame to the first anchor based on a preset order or preset sending time. Correspondingly, the first anchor sequentially receives, based on the preset order or the preset sending time of the at least one other anchor, the second acknowledgement frame sent by each of the at least one other anchor.

The first anchor sends the second data frame through multicast, so that a data transmission amount is reduced, and data transmission efficiency is improved.

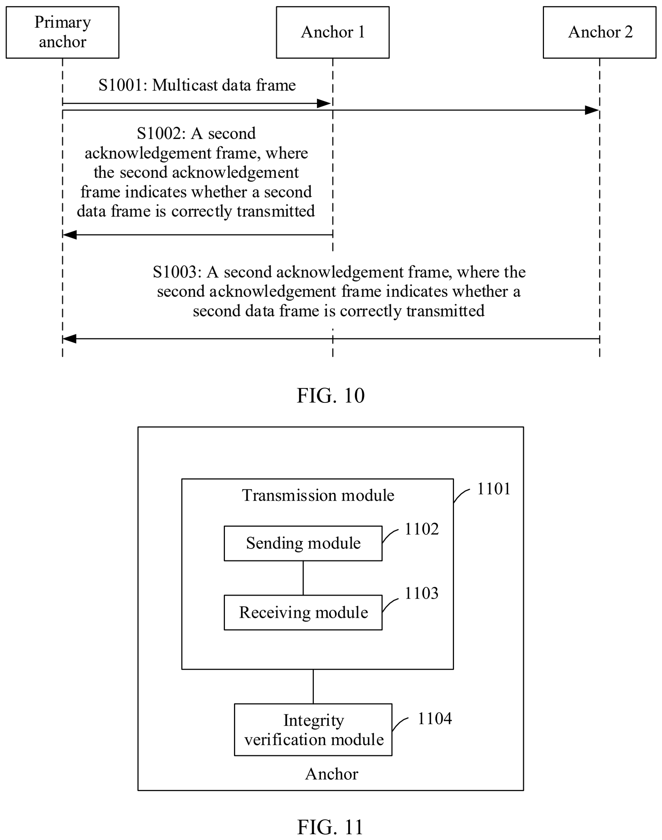

FIG. 10 is a further flowchart of a communication method for anchors on a vehicle according to an embodiment of this application. It is assumed that the preset order is that an anchor 1 performs sending first, and an anchor 2 performs sending later. As shown in FIG. 10, the following steps are included.

S1001: A primary anchor sends multicast data frames to the anchor 1 and the anchor 2 through multicast. The multicast data frames include a second data frame corresponding to the anchor 1 and a second data frame corresponding to the anchor 2.

S1002: The anchor 1 sends a second acknowledgement frame to the primary anchor, where the second acknowledgement frame indicates whether the second data frame is correctly transmitted.

S1003: The anchor 2 sends a second acknowledgement frame to the primary anchor, where the second acknowledgement frame indicates whether the second data frame is correctly transmitted.

It may be understood that, to implement the foregoing functions, the anchor on the vehicle includes corresponding hardware and/or software modules for performing the functions. With reference to the example algorithm steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

In embodiments of this application, the anchor on the vehicle may be divided into functional modules based on the foregoing method examples. For example, each functional module may be obtained through division based on each corresponding function, or two or more functions may be integrated into one processing module. It should be noted that, in embodiments of this application, division into the modules is an example, and is merely logical function division. In actual implementation, another division manner may be used. It should be noted that a name of a module in embodiments of this application is an example, and the name of the module is not limited in an actual implementation.

When each functional module is obtained through division based on each corresponding function, FIG. 11 is a diagram of a structure of an anchor on a vehicle according to an embodiment of this application. As shown in FIG. 11, a plurality of anchors are disposed on the vehicle, and wireless communication is performed between the plurality of anchors. A first anchor in the plurality of anchors is used as an example and the first anchor includes:
a transmission module 1101: configured to: after a wireless connection is established between the first anchor and a second anchor in the plurality of anchors, transmit a first data frame with the second anchor, where channel coding is performed on the first data frame, where
the transmission module 1101 is further configured to transmit a first acknowledgement frame with the second anchor, where the first acknowledgement frame indicates whether the first data frame is correctly transmitted.

Optionally, the first data frame is a frame used to measure a distance between a vehicle key and the vehicle.

Optionally, the channel coding includes a polar code.

Optionally, the first acknowledgement frame indicates that the first data frame is not correctly transmitted, and the transmission module 1101 is further configured to:
retransmit the first data frame with the second anchor.

Optionally, the first acknowledgement frame indicates that the first data frame is correctly transmitted, and the transmission module 1101 is further configured to:
transmit a third data frame with the second anchor, where the channel coding is performed on the third data frame; and
transmit a third acknowledgement frame with the second anchor, where the third acknowledgement frame indicates whether the third data frame is correctly transmitted.

Optionally, the transmission module 1101 includes a sending module 1102 and a receiving module 1103, where
the sending module 1102 is configured to send the first data frame to the second anchor; and
the receiving module 1103 is configured to receive the first acknowledgement frame sent by the second anchor.

Optionally, the sending module 1102 is configured to:
send the first data frame to the second anchor at first power, where the first power is greater than a preset reference power value.

Optionally, the transmission module 1101 includes the sending module 1102 and the receiving module 1103, where
the receiving module 1103 is configured to receive the first data frame sent by the second anchor; and
the sending module 1102 is configured to send the first acknowledgement frame to the second anchor.

Optionally, an integrity verification module 1104 is further included, where the integrity verification module 1104 is configured to:
before the sending module 1102 sends the first acknowledgement frame to the second anchor, perform integrity verification on the first data frame, to determine whether the integrity verification succeeds, where
when the integrity verification succeeds, the first acknowledgement frame indicates that the first data frame is correctly transmitted; or when the integrity verification fails, the first acknowledgement frame indicates that the first data frame is not correctly transmitted.

Optionally, a security module is further included, where the security module is configured to:
if the first acknowledgement frame indicates that the first data frame is correctly transmitted, perform authentication verification and/or decryption verification on the first data frame.

Optionally, the transmission module 1101 includes the sending module 1102 and the receiving module 1103, where
the sending module 1102 is further configured to send a second data frame to at least one other anchor than the first anchor in the plurality of anchors, where the second data frame is used to determine that a wireless connection between the first anchor and the other anchor is normal; and
the receiving module 1103 is further configured to receive a second acknowledgement frame sent by the at least one other anchor, where the second acknowledgement frame indicates whether the second data frame is correctly transmitted.

Optionally, there are at least two other anchors, and the sending module 1102 is configured to:
send a multicast data frame to the at least one other anchor through multicast, where the multicast data frame includes a second data frame corresponding to each other anchor.

Optionally, the receiving module 1103 is configured to:
sequentially receive, based on a preset order or preset sending time of the at least one other anchor, a second acknowledgement frame sent by each of the at least one other anchor.

Optionally, the plurality of anchors include a primary anchor and a secondary anchor, the primary anchor is connected to a control system of the vehicle through a bus, the first anchor is the primary anchor, and the other anchor is the secondary anchor.

Optionally, the wireless communication includes at least one of the following: SparkLink communication, Bluetooth communication, or Wi-Fi communication.

Optionally, a ranging module may be further included, configured to obtain ranging information/position information/positioning information.

The anchor provided in this embodiment is configured to perform the operation performed by the first anchor in the foregoing method embodiments. Technical principles and technical effect are similar, and details are not described herein again.

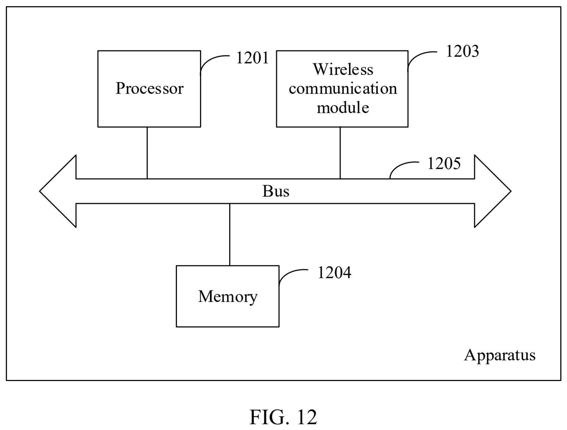

FIG. 12 is a diagram of a structure of an apparatus according to an embodiment of this application. The apparatus may be an anchor disposed on a vehicle. Refer to FIG. 12. The apparatus includes a processor 1201, a wireless communication module 1203, a memory 1204, and a bus 1205. The processor 1201 includes one or more processing cores. The processor 1201 runs a software program and a module, to execute various functional applications and process information. The wireless communication module 1203 may be implemented as a communication component, and the communication component may be a chip. The memory 1204 is connected to the processor 1201 through the bus 1205. The memory 1204 may be configured to store at least one program instruction, and the processor 1201 is configured to execute the at least one program instruction, to implement the technical solution in the foregoing embodiments. Implementation principles and technical effect thereof are similar to those of the foregoing method embodiments. Details are not described herein again.

Optionally, the wireless communication module 1203 may use at least one of the following wireless communication: SparkLink communication, Bluetooth communication, or Wi-Fi communication.

The processor may read a software program in the memory, interpret and execute instructions of the software program, and process data of the software program. When data needs to be sent to another apparatus, the processor outputs a baseband signal to a control circuit after performing baseband processing on the to-be-sent data. After performing radio frequency processing on the baseband signal, the control circuit sends a radio frequency signal in an electromagnetic wave form through an antenna. When data is sent to the apparatus, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 12 shows only one memory and one processor. In an actual apparatus, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process communication data, and the central processing unit is mainly configured to execute a software program and process data of the software program. A person skilled in the art may understand that the baseband processor and the central processing unit may be integrated into one processor, or may be independent processors, and are connected by using a technology like a bus. A person skilled in the art may understand that the apparatus may include a plurality of baseband processors to adapt to different network standards, the apparatus may include a plurality of central processing units to enhance a processing capability of the apparatus, and components of the apparatus may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function. The memory may be integrated into the processor, or may be independent of the processor. The memory includes a cache Cache, and may store frequently accessed data/instructions.

The processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like, for example, a microcontroller unit (microcontroller unit, MCU), and may implement or perform the methods, the steps, and the logical block diagrams that are disclosed in embodiments of this application. The steps of the method disclosed with reference to embodiments of this application may be directly performed by a hardware processor, or may be performed by a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction structure or a data structure and that can be accessed by a computer, but is not limited thereto.

The memory in this embodiment of this application may alternatively be a circuit or any other apparatus that can implement a storage function, and is configured to store program instructions and/or data. All or a part of the method provided in embodiments of this application may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, a communication device, a communication apparatus, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application further provides a computer-readable storage medium. The computer-readable storage medium stores a computer program. When the computer program is executed by a device, the device may implement the methods provided in the foregoing method embodiments.

An embodiment of this application further provides a computer program product. The computer program product is configured to store a computer program. When the computer program is executed by a device, the device may implement the methods provided in the foregoing method embodiments.

An embodiment of this application further provides a chip or a chip system. The chip may include a processor. The processor is configured to invoke a program or instructions in a memory, to implement the methods provided in the foregoing method embodiments. The chip system may include the chip, and may further include another component like a memory or a transceiver.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, modules and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

Functional modules in embodiments of this application may be integrated into one processing module, each module may exist alone physically, or two or more modules may be integrated into one module.

When the functions are implemented in a form of a software functional module and sold or used as an independent product, the functions may be stored in one or more computer-readable storage media.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method for anchors on a vehicle, applied to a first anchor in the plurality of anchors disposed on the vehicle, wherein wireless communication is performed between the plurality of anchors, and the method comprises:
after a wireless connection is established between the first anchor and a second anchor in the plurality of anchors, transmitting a first data frame with the second anchor, wherein channel coding is performed on the first data frame; and
transmitting a first acknowledgement frame with the second anchor, wherein the first acknowledgement frame indicates whether the first data frame is correctly transmitted.

2. The method according to claim 1, wherein the first data frame is a frame used to measure a distance between a vehicle key and the vehicle.

3. The method according to claim 1, wherein the channel coding comprises a polar polar code.

4. The method according to any one of claims 1 to 3, wherein the first acknowledgement frame indicates that the first data frame is not correctly transmitted, and the method further comprises:
retransmitting the first data frame with the second anchor.

5. The method according to any one of claims 1 to 3, wherein the transmitting the first data frame with the second anchor comprises:
sending the first data frame to the second anchor; and
the transmitting the first acknowledgement frame with the second anchor comprises:
receiving the first acknowledgement frame sent by the second anchor.

6. The method according to any one of claims 1 to 3, wherein the transmitting the first data frame with the second anchor comprises:
receiving the first data frame sent by the second anchor; and
the transmitting the first acknowledgement frame with the second anchor comprises:
sending the first acknowledgement frame to the second anchor.

7. The method according to claim 6, wherein before sending the first acknowledgement frame to the second anchor, further comprising:
performing integrity verification on the first data frame, to determine whether the integrity verification succeeds, wherein
when the integrity verification succeeds, the first acknowledgement frame indicates that the first data frame is correctly transmitted; or when the integrity verification fails, the first acknowledgement frame indicates that the first data frame is not correctly transmitted.

8. The method according to any one of claims 1 to 7, wherein the method further comprises:
sending a second data frame to at least one other anchor than the first anchor in the plurality of anchors, wherein the second data frame is used to determine that a wireless connection between the first anchor and the other anchor is normal; and
receiving a second acknowledgement frame sent by the at least one other anchor, wherein the second acknowledgement frame indicates whether the second data frame is correctly transmitted.

9. The method according to claim 8, wherein there are at least two other anchors, and the sending the second data frame to the at least one other anchor than the first anchor in the plurality of anchors comprises:
sending a multicast data frame to the at least one other anchor through multicast, wherein the multicast data frame comprises a second data frame corresponding to each other anchor.

10. The method according to claim 9, wherein the receiving the second acknowledgement frame sent by the at least one other anchor comprises:
sequentially receiving, based on a preset order or preset sending time of the at least one other anchor, a second acknowledgement frame sent by each of the at least one other anchor.

11. The method according to any one of claims 1 to 10, wherein the wireless communication comprises at least one of the following: SparkLink communication, Bluetooth communication, or wireless fidelity Wi-Fi communication.

12. An anchor, used as a first anchor in a plurality of anchors disposed on a vehicle, wherein wireless communication is performed between the plurality of anchors, and the first anchor comprises:
a transmission module: configured to: after a wireless connection is established between the first anchor and a second anchor in the plurality of anchors, transmit a first data frame with the second anchor, wherein channel coding is performed on the first data frame, wherein
the transmission module is further configured to transmit a first acknowledgement frame with the second anchor, wherein the first acknowledgement frame indicates whether the first data frame is correctly transmitted.

13. The anchor according to claim 12, wherein the first data frame is a frame used to measure a distance between a vehicle key and the vehicle.

14. The anchor according to claim 12, wherein the channel coding comprises a polar polar code.

15. The anchor according to any one of claims 12 to 14, wherein the first acknowledgement frame indicates that the first data frame is not correctly transmitted, and the transmission module is further configured to:
retransmit the first data frame with the second anchor.

16. The anchor according to any one of claims 12 to 14, wherein the transmission module comprises a sending module and a receiving module;
the sending module is configured to send the first data frame to the second anchor; and
the receiving module is configured to receive the first acknowledgement frame sent by the second anchor.

17. The anchor according to any one of claims 12 to 14, wherein the transmission module comprises a sending module and a receiving module;
the receiving module is configured to receive the first data frame sent by the second anchor; and
the sending module is configured to send the first acknowledgement frame to the second anchor.

18. The anchor according to claim 17, further comprising an integrity verification module, wherein the integrity verification module is configured to:
before the sending module sends the first acknowledgement frame to the second anchor, perform integrity verification on the first data frame, to determine whether the integrity verification succeeds, wherein
when the integrity verification succeeds, the first acknowledgement frame indicates that the first data frame is correctly transmitted; or when the integrity verification fails, the first acknowledgement frame indicates that the first data frame is not correctly transmitted.

19. The anchor according to any one of claims 12 to 18, wherein the transmission module comprises the sending module and the receiving module;
the sending module is further configured to send a second data frame to at least one other anchor than the first anchor in the plurality of anchors, wherein the second data frame is used to determine that a wireless connection between the first anchor and the other anchor is normal; and
the receiving module is further configured to receive a second acknowledgement frame sent by the at least one other anchor, wherein the second acknowledgement frame indicates whether the second data frame is correctly transmitted.

20. The anchor according to claim 19, wherein there are at least two other anchors, and the sending module is configured to:
send a multicast data frame to the at least one other anchor through multicast, wherein the multicast data frame comprises a second data frame corresponding to each other anchor.

21. The anchor according to claim 20, wherein the receiving module is configured to:
sequentially receive, based on a preset order or preset sending time of the at least one other anchor, a second acknowledgement frame sent by each of the at least one other anchor.

22. The anchor according to any one of claims 12 to 21, wherein the wireless communication comprises at least one of the following: SparkLink communication, Bluetooth communication, or wireless fidelity Wi-Fi communication.

23. An apparatus, comprising a processor, wherein the processor is configured to: be coupled to a memory, read instructions in the memory, and enable, according to the instructions, the apparatus to perform the method according to any one of claims 1 to 11.

24. A chip system, wherein the chip system comprises a processor, and the processor is configured to: be coupled to a memory, read instructions in the memory, and enable, according to the instructions, the chip system to perform the method according to any one of claims 1 to 11.

25. A computer-readable storage medium, wherein the computer-readable storage medium stores a computer program, and when the computer program is run, the method according to any one of claims 1 to 11 is implemented.
